# EUROPEAN PATENT APPLICATION

(11) **EP 2 657 922 A2**
(43) Date of publication of application: **30.10.2013**
(21) Application number: 13162771.3
(22) Date of filing: 08.04.2013
(51) Int. Cl.: G08G 5/00, G08G 5/02, G01C 23/00

(54) **Methods and systems for representing segmented circle airport marker information on a cockpit display**

(30) Priority: 24.04.2012 US 201213454649
(71) Applicant: Honeywell International Inc., NJ 07962-2245 (US)
(72) Inventor: Sabnis, Rohini, Morristown, NJ 07962-2245 (US); Samuthirapandian, Subash, Morristown, NJ 07962-2245 (US); Velappan, Kalaiarasu, Morristown, NJ 07962-2245 (US); A, Fazurudheen, Morristown, NJ 07962-2245 (US)
(74) Representative: Houghton, Mark Phillip

(57) **Abstract**

A method is provided for displaying information on a display device of an aircraft. The method comprises determining graphics data for visual aids that represent segmented circle airport marker (SCAM) information, incorporating the graphics data into a user interface, and generating the user interface for display on the display device of the aircraft.

## Description

### TECHNICAL FIELD

The present disclosure generally relates to methods and systems for presenting airport information in a display, and more particularly relates to methods and systems of presenting airport information of an uncontrolled airport to a pilot.

### BACKGROUND

Uncontrolled airports are those airports that are not served by an operating air traffic control. When approaching an uncontrolled airport, a pilot needs to be familiar with the traffic pattern, and the landing direction of the airport. Typically, a Segmented Circle Airport Marker (SCAM) System that includes visual aids for providing this information is provided at a ground location of these uncontrolled airports. The visual aids are marked by a segmented circle that allows a pilot easily view and identify the visual aids from the cockpit when flying over the uncontrolled airport.

In order to make use of the segmented circle information when approaching an uncontrolled airport, a pilot needs to know the existence of the SCAM system, and a location of the SCAM system. Currently, there is no means for informing the pilot about the existence and location of the SCAM system. The pilot must fly over the airport to find and view the SCAM system and then return to join the traffic pattern. This results in increased flying time and increased fuel consumption during the landing phase of the aircraft.

Hence, there is a need for systems and methods for presenting this information to the pilot in the aircraft without requiring the pilot to fly over the airport. Other desirable features and characteristics will become apparent from the subsequent detailed description and the appended claims, taken in conjunction with the accompanying drawings and the foregoing technical field and background.

### BRIEF SUMMARY

A method is provided for displaying information on a display device of an aircraft. The method comprises determining graphics data for visual aids that represent segmented circle airport marker (SCAM) information; incorporating the graphics data into a user interface; and generating the user interface for display on the display device of the aircraft.

A system is provided for displaying information on a display device of an aircraft. The system comprises an information datastore; and a computer module. The computer module accesses the data storage device to determine graphics data for visual aids that represent segmented circle airport marker (SCAM) information, incorporates the graphics data into a user interface, and generates the user interface for display on the display device of the aircraft.

Furthermore, other desirable features and characteristics of the method and system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following figures, wherein like numerals denote like elements, and wherein:

FIG. 1 is a functional block diagram illustrating a segmented circle airport marker (SCAM) system for an aircraft in accordance with exemplary embodiments;

FIG. 2 is dataflow diagram illustrating a SCAM module that communicates with an information datastore of the SCAM system in accordance with exemplary embodiments;

FIGS. 3A and 3B are illustrations of graphical aids of a user interface that may be generated by the SCAM module and displayed on a display device of the aircraft in accordance with exemplary embodiments; and

FIG. 4 is a flowchart illustrating an information display method that may be performed by the SCAM module in accordance with exemplary embodiments.

### DETAILED DESCRIPTION

The following detailed description is merely exemplary in nature and is not intended to limit the disclosure or the application and uses of the disclosure. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

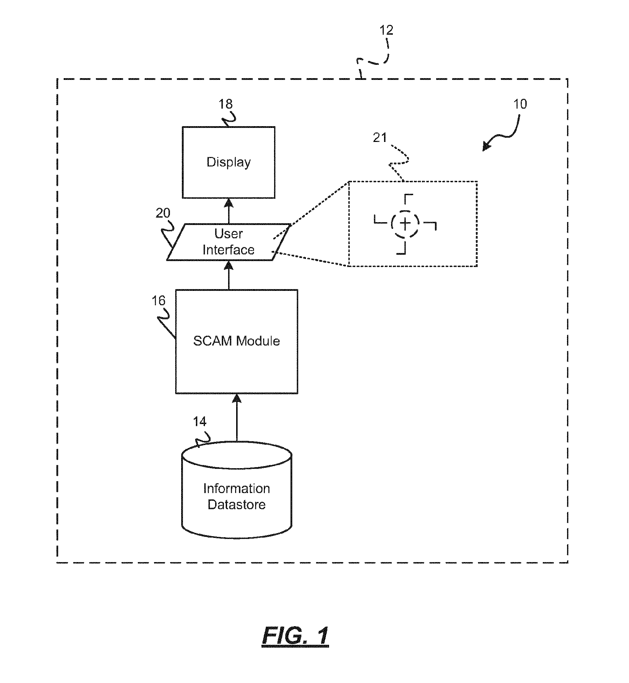

Referring now to FIG. 1, exemplary embodiments of the present disclosure are directed to an electronic segmented circle airport marker (SCAM) system shown generally at 10 that is associated with an aircraft 12. As can be appreciated, the electronic SCAM system 10 described herein can be implemented in any aircraft 12 having onboard a computing device that is associated with a display device, where the computing device includes at least a processor, and one or more data storage devices.

As shown in FIG. 1, the electronic SCAM system 10 includes, but is not limited to, an information datastore 14, a SCAM module 16, and a display 18. The information datastore 14 stores information pertaining to various uncontrolled airports. In various embodiments, the information datastore 14 is a SCAM datastore that stores SCAM specific information for the various uncontrolled airports. In various other embodiments, the information datastore 14 is a navigation datastore that stores trip navigation information that may be used to determine SCAM specific information. As can be appreciated, the information datastore 14 may reside in a data storage device of the computing device on the aircraft 12, may reside in a data storage device on a computing device at a location remote from the aircraft 12 (e.g., on a central server), or may partially reside on the computing device of the aircraft 12 and partially on the computing device at the location remote from the aircraft 12.

The SCAM module 16 may include one or more instructions that may be executed by the processor of the computing device. The instructions of SCAM module 16 access the information datastore 14, determine SCAM information 21, and generate a user interface 20 having the SCAM information 21. As can be appreciated, depending on the location of the information datastore 14, the SCAM module 16 may communicate with the information datastore 14 directly, and/or may communicate with the information datastore 14 indirectly through one or more communication protocols.

The display 18 displays the user interface 20. The display 18 may be located in a cockpit of the aircraft 12 for viewing by, for example, a pilot of the aircraft 12. In various embodiments, the user interface 20 may automatically display the SCAM information 21 based on a flight condition of the aircraft 12. In various other embodiments, a pilot may interact with the user interface 20 to display the SCAM information 21 using one or more input devices of the computing system.

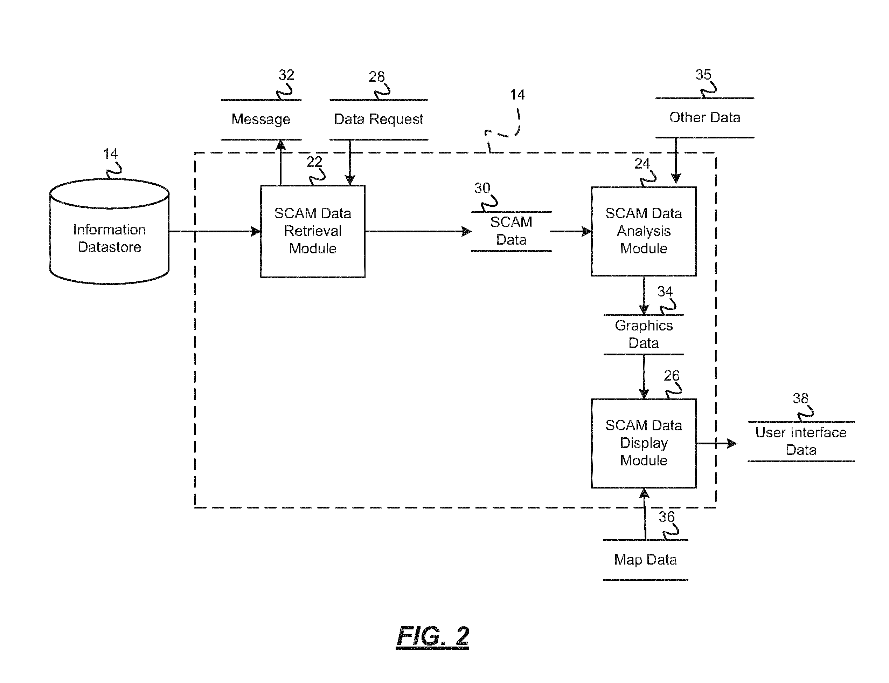

Referring now to FIG. 2, a dataflow diagram illustrates various embodiments of the SCAM module 16 of the electronic SCAM system 10. Various embodiments of electronic SCAM systems 10 according to the present disclosure may include any number of sub-modules embedded within the SCAM module 16. As can be appreciated, the sub-modules shown in FIG. 2 may be combined and/or further partitioned to similarly determine and display SCAM information 21. Inputs to the SCAM module 16 may be received from other modules (not shown), determined/modeled by other sub-modules (not shown) within the SCAM module 16, and/or may be user input that is based on a user interacting with the user interface 20. In various embodiments, the SCAM module 16 includes a SCAM data retrieval module 22, a SCAM data analysis module 24, and a SCAM data display module 26.

The SCAM data retrieval module 22 receives as input a data request 28. The data request 28 includes some indication that the SCAM information 21 is desired for a particular uncontrolled airport (e.g., an indication that the aircraft 12 is approaching a particular airport or a user simply requesting the information for a particular airport). When the SCAM information 21 is desired, the SCAM data retrieval module 22 retrieves SCAM data 30 associated with the particular airport from the information datastore 14. For example the particular airport may be referenced by an airport identifier and the data associated with that airport identifier is retrieved. If the SCAM data 30 is not available, the SCAM data retrieval module 22 generates a message 32 indicating such.

In various embodiments, when the information datastore 14 is a SCAM datastore, the information datastore 14 includes particular SCAM data 30 that may be easily interpreted to determine what SCAM information 21 to display. Such SCAM data 30 may include, but is not limited to, an airport identifier, a presence of a SCAM system at the airport, a radius of a segmented circle at the airport, a latitude and longitude of the segmented circle at the airport, a number of runways at the airport, runway orientations at the airport, traffic patterns of each runway at the airport, a presence of a wind direction indicator at the airport, a presence of a landing direction indicator at the airport, an a presence of a closed field indicator at the airport. Table 1 describes possible values for the SCAM data 30 of a SCAM datastore.

**Table 1**

| **DESCRIPTION** | **BITS** | **COMMENTS** |
|---|---|---|
| Airport Identifier | 32 | ICAO Identifier |
| Presence of SCAM | 1 | Zero for not available, one for available |
| Radius of Circle | 32 | Unit in Feet |
| SCAM Latitude | 32 | Unit in Degrees |
| SCAM Longitude | 32 | Unit in Degrees |
| Number of Runways | 8 | Number of runways in the airport |
| Runway Orientation | 320 | Assuming a max of ten runways in an airport, for each runway heading four bytes may be allocated. |
| Traffic Pattern | 10 | One bit for each runway, zero indicating left and one indicating right |
| Presence of Wind Direction Indicator | 1 | Zero indicating not available, one indicating available. |
| Presence of Landing Direction Indicator | 1 | Zero indicating not available, one indicating available. |
| Presence of Closed Field Signal | 1 | Zero indicating not available, one indicating available. |

In various other embodiments, when the information datastore 14 is a navigation datastore, the information datastore 14 includes SCAM data 30 that may be further analyzed to determine what SCAM information 21 to display. Such SCAM data 30 may include navigation information that is typically stored in a navigation database.

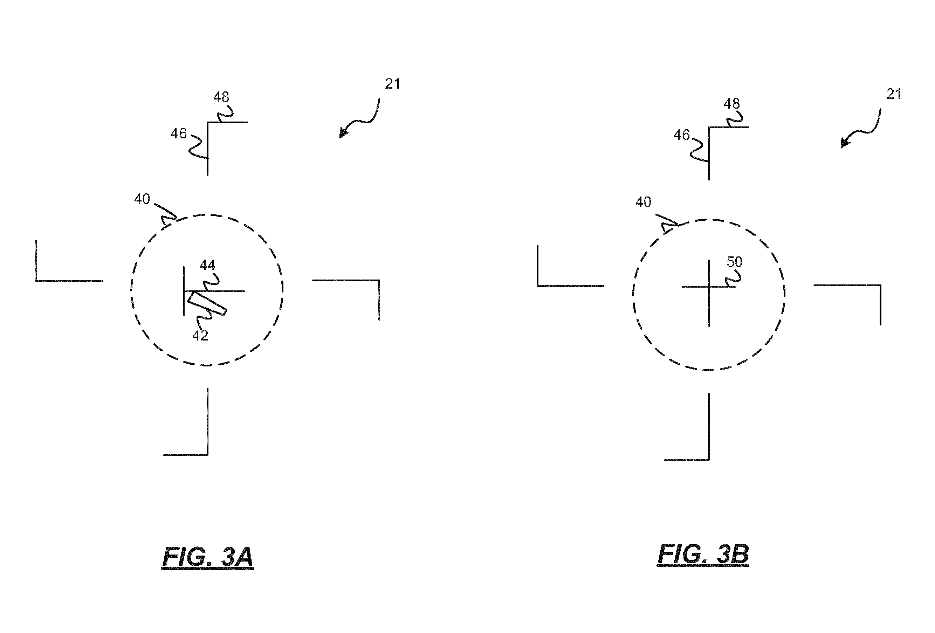

The SCAM data analysis module 24 receives as input the SCAM data 30. The SCAM data analysis module 24 analyzes the SCAM data 30 to determine graphics data 34. The graphics data 34 includes data that defines graphical representations of visual aids that may be incorporated into the user interface 20 to illustrate the SCAM information 21. As shown in FIGS. 3A and 3B, the visual aids may be similar to the aids provided at the uncontrolled airport, and may include, but are not limited to, a segmented circle 40, a wind direction indicator 42, a landing direction indicator 44, a landing strip indicator, 46 a traffic pattern indicator 48, and a closed field indicator 50. As can be appreciated, the graphics data 34 may include any combination of the visual aids provided in FIGS. 3A and 3B and is not limited to the examples of FIGS. 3A and 3B. For example, the graphics data 34 may include the landing strip indicator 46 and the traffic pattern indicator 48 without the segmented circle and other aids.

The segmented circle 40 is used to identify the SCAM information 21. As shown, the segmented circle 40 is a circle defined by a segmented line. The wind direction indicator 42 identifies the direction of the wind at the uncontrolled airport. As shown, the wind direction indicator 42 is cone-shaped and is located at the center of the segmented circle 40. The wind direction indicator 42 points into the wind. The landing direction indicator 44 identifies the direction in which the landings and takeoffs of the uncontrolled airport are to be made. As shown, the landing pattern indicator 44 is T-shaped and is located at the center of the segmented circle 40. A short end of the landing pattern indicator 44 indicates the direction of the landings and a long end of the landing pattern indicator 44 indicates the direction of the takeoffs.

The landing strip indicators 46 identify an orientation of the landing strips and and/or give an indication of the landing strip specified for use. As shown, the landing strip indicators 46 are lines located outside of the segmented circle 40 that show an orientation of landing strips and/or give a positive indication of the strip specified for use. The traffic pattern indicators 48 are associated with the landing strip indicators 46 and identify a direction of the traffic pattern when there is any variation from a normal left-hand pattern. As shown, the traffic pattern indicators when arranged with the landing strip indicators 46 are L-shaped lines located outside of the segmented circle 40 that show a direction of the turns (e.g., either left or right).

The closed field indicator 50 identifies whether a field of the airport is permanently closed to all traffic. As shown, the closed field indicator 50 includes a cross located in the center of the segmented circle 40. When this closed field indicator 50 is used, the wind direction indicator 42 and the landing direction indicator 44 are typically removed from the segmented circle 40 while other indicators may remain in place.

With reference back to FIG. 2, the SCAM data analysis module 24 analyzes the SCAM data 30 to determine which aids to display and how to display the aids (e.g., at what location and what orientation). If sufficient data is not available to directly determine how to display the aids, the SCAM data analysis module may determine how to display the aids using one or more data analysis methods that take into account other available data 35. In one example, data analysis methods such as those described in U.S. Patent No. 7,535,381, which is incorporated herein by reference in its entirety, can determine the orientation of the wind direction indicator 42 and the landing direction indicator 44 using voice weather data. As can be appreciated, other known data analysis methods are considered to be within the scope of the invention.

The SCAM data display module 26 receives as input the graphics data 34 and map data 36. The map data 36 can include data for displaying an airport map or other information associated with the uncontrolled airport. The airport map can include, for example, but is not limited to, a moving map, an airport moving map, or Synthetic Vision System (SVS).

The SCAM data display module 26 generates user interface data 38 to display the graphics data 34 in some relation to the map data 36. For example, the SCAM data display module 26 incorporates the graphics data 34 into the map data 36 by overlaying the graphics data 34 on the map data 36 to display SCAM information 21 on the map itself. The SCAM data display module 26 may overlay the graphics data 34 in a predefined location or at a location determined relative to the airport map. In another example, the SCAM data display module 26 incorporates the graphics data 34 by adding the graphics data 34 to the map data 36 to display the SCAM information 21 at a location adjacent to the airport map (e.g., in another area of the display 18).

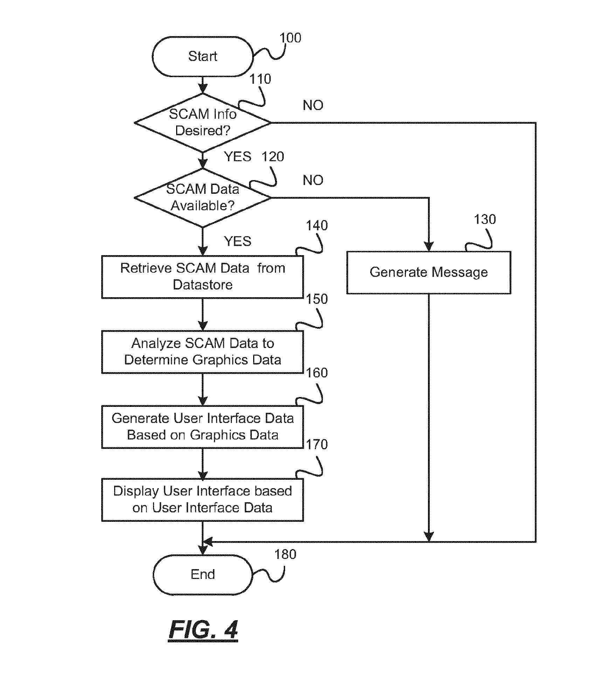

Referring now to FIG. 4, and with continued reference to FIGS. 1 through 3A and 3B, a flowchart illustrates a display method that can be performed by the SCAM module 16 of FIG. 2 in accordance with the present disclosure. As can be appreciated in light of the disclosure, the order of operation within the method is not limited to the sequential execution as illustrated in FIG. 4, but may be performed in one or more varying orders as applicable and in accordance with the present disclosure.

In various embodiments, the method can be scheduled to run based on predetermined events, and/or can run continually during operation of the computing device of the aircraft 12.

The method may begin at 100. It is determined whether the data request 28 is received indicating that SCAM information 21 is desired at 110. If SCAM information 21 is not desired at 110, the method may end at 180.

If, however, the SCAM information 21 is desired (e.g., when approaching an uncontrolled airport), it is determined whether SCAM data 30 is available for the particular airport from the information datastore 14 at 120. If SCAM data 30 is not available at 120, the message 32 may be generated indicating such at 130 and the method may end at 180.

If, however, SCAM data 30 is available at 120, the SCAM data 30 associated with the uncontrolled airport is retrieved from the information datastore 14 at 140. The SCAM data 30 is analyzed, for example, as discussed above, to determine the graphics data 34 at 150. The user interface data 38 is generated based on the graphics data 34 and the map data 36 at 160. The user interface 20 is displayed based on the user interface data 38 at 170. Thereafter, the method may end at 180.

Those of skill in the art will appreciate that the various illustrative logical blocks, modules, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of displaying information on a display device of an aircraft, comprising:
determining graphics data for visual aids that represent segmented circle airport marker (SCAM) information;
incorporating the graphics data into a user interface; and
generating the user interface for display on the display device of the aircraft.

2. The method of claim 1 wherein the visual aids include at least one of a segmented circle, a wind direction indicator, a landing direction indicator, a landing strip indicator, a traffic pattern indicator, and a closed field indicator.

3. The method of claim 1 wherein the incorporating the graphics data into the user interface comprises incorporating the graphics data in relation to a map into the user interface.

4. The method of claim 3 wherein the map is at least one of a moving map, an airport moving map, and a synthetic vision system.

5. The method of claim 3 wherein the incorporating the graphics data in relation to the map comprises incorporating the graphics data in relation to the map by overlaying the graphics data on the map.

6. The method of claim 3 wherein the incorporating the graphics data in relation to the map comprises incorporating the graphics data in relation to the map by providing the graphics data at a location adjacent to the map.

7. The method of claim 1 further comprising retrieving data SCAM data for an airport from a datastore, and wherein the determining the graphics data is based on the SCAM data.

8. The method of claim 7 wherein the SCAM data includes at least one of an airport identifier, a presence of a SCAM system at the airport, a radius of a segmented circle at the airport, a latitude and longitude of the segmented circle at the airport, a number of runways at the airport, a runway orientation of runways at the airport, traffic patterns of runways at the airport, a presence of a wind direction indicator at the airport, a presence of a landing direction indicator at the airport, and a presence of a closed field indicator at the airport.

9. The method of claim 7 wherein the SCAM data includes navigation data.

10. A system for displaying information on a display device of an aircraft, comprising:
an information datastore; and
a computer module that accesses the data storage device to determine graphics data for visual aids that represent segmented circle airport marker (SCAM) information, that incorporates the graphics data into a user interface, and that generates the user interface for display on the display device of the aircraft.
